# EUROPÄISCHE PATENTSCHRIFT

(11) **EP 0 661 525 B1**
(45) Veröffentlichungstag und Bekanntmachung des Hinweises auf die Patenterteilung: **26.03.1997**
(21) Anmeldenummer: 94116135.8
(22) Anmeldetag: 13.10.1994
(51) Int. Cl.: G01D 11/24, G12B 9/02

(54) **Montagegehäuse aus Kunststoff für Zeigermesswerke**
Plastic housing for pointer instruments
Boîtier plastique pour instruments à aigville

(30) Priorität: 23.10.1993 DE 9316219 U
(43) Veröffentlichungstag der Anmeldung: 05.07.1995
(73) Patentinhaber: Orka Optik GmbH, 78056 Villingen-Schwenningen Weigheim (DE)
(72) Erfinder: Heyler, Adolf, D-78056 Villingen-Schwenningen (DE)
(74) Vertreter: Neymeyer, Franz, Dipl.-Ing. (FH)

(56) Entgegenhaltungen:
- DE-A- 3 535 526
- FR-A- 2 412 737

## Beschreibung

Die Erfindung betrifft ein Montagegehäuse aus Kunststoff für Zeigermeßwerke, insbesondere für mechanische Thermometer, Barometer, Hygrometer und dgl., die jeweils eine zentrale Zeigerwelle mit einem über eine Ringskala beweglichen Zeiger aufweisen, bestehend aus einer im wesentlichen zylindrischen, frontseitig offenen Gehäusedose mit einem rückseitig an einer Dosenwand angeformten Gehäuseboden und einem frontseitigen Ringflansch, die im Innern mit federnd auslenkbaren Schnappelementen zum selbsttätigen Halten eines eingesetzten Meßwerks versehen ist und die außenseitig sperrzahnartige Befestigungselemente zu ihrer Befestigung in einer Ausnehmung eines Meßgeräteträgers aufweist.

In Montagegehäuse der gattungsgemäßen Art werden Zeigermeßwerke, d.h. Meßwerke mit einem drehenden Zeiger als Anzeigeorgan, so eingesetzt, daß der Zeiger des Meßwerks beim Meßvorgang über eine auf dem Flanschring stirnseitig angeordnete Ringskala oder Kreisskala streicht, die je nach Ausführung des Meßgerätes einen größeren oder kleineren Durchmesser haben kann, dem auch die Zeigerlänge angepaßt ist.

Bei den durch offenkundige Benutzung (druckschriftlich nicht belegten) bekannten Montagegehäusen der gattungsgemäßen Art sind die Flanschringe einstückig an den im wesentlichen zylindrischen Gehäusedosen stirnseitig angeformt, so daß die zylindrische Dosenwand einerseits am Flanschring und andererseits am Gehäuseboden endet und deshalb in radialer Richtung zumindest an beiden Enden völlig unelastisch ist. Aus diesem Grunde ist es auch erforderlich, die auslenkbaren Schnappelemente, insbesondere Sperrzähne, an elastischen Zungen anzubringen, die relativ zur Gehäusewand beweglich sind. Dabei können diese Zungen im Innern der Gehäusedose an deren Boden angeformt oder aber im Bereich der Dosenwand durch dreiseitige Schlitzung ausgespart bzw. frei geschnitten sein, so daß sie sich auch relativ zur Dosenwand in radialer Richtung elastisch bewegen können. Abgesehen davon, daß solche Zungen ihre Bewegungselastizität auch dann beibehalten, wenn die daran befestigten Sperrzähne mit den zu haltenden Teilen des Meßwerks in Eingriff stehen und somit die Gefahr des ungewollten selbsttätigen Lösens relativ groß ist, besteht auch das Bestreben, derartige Montagegehäuse so zu gestalten, daß unterschiedliche Zeigermeßwerke, beispielsweise Thermometer, Barometer, Hygrometer u. dgl. wahlweise eingesetzt werden können. Hinzu kommt, daß die gleichen Zeigermeßwerke mit unterschiedlich langen Zeigern bzw. im Durchmesser unterschiedlich großen Ringskalen versehen werden, so daß bei den bekannten Montagegehäusen jeder Ringskala mit einem bestimmten Durchmesser auch ein dazu passendes komplettes Montagegehäuse zur Verfügung stehen muß, obwohl das Meßwerk an sich und die sie aufnehmende Gehäusedose immer die gleiche Form haben könnte.

Bei einem anderen bekannten Zeigermeßinstrument (DE-A-35 35 526) ist ein Gehäusetubus mit einer rechteckigen Frontplatte vorgesehen, die an zwei sich diametral gegenüberliegenden Umfangsabschnitten mit dem Gehäusetubus fest verbunden ist. Die Frontplatte ist nicht abnehmbar. Im Innern weist der Gehäusetubus Rast- und Klemmelemente auf, die zur Fixierung des Meßwerks dienen.

Ein weiteres bekanntes Zeigermeßinstrument (FR-A-2 412 737) ist mit einem zweiteiligen viereckigen Gehäuse versehen. Das Gehäuse besteht aus einem Gehäuseoberteil mit einem nur um ein geringes Maß nach außen vorspringenden Rand und mit einer umlaufenden rechteckigen Gehäusewand und aus einem Gehäuseunterteil mit einer ebenfalls rechteckigen Gehäusewand. Die Gehäusewand des unteren Gehäuseteils ist mit klinkenartigen Rastzungen versehen, die beim Zusammenfügen der beiden Gehäuseteile mit ihren Rastzähnen formschlüssig in dazu passende Ausnehmungen der Gehäusewand des oberen Gehäuseteils in Eingriff gebracht werden. Die radiale Elastizität der Rastzungen bzw. der Gehäusewand des unteren Gehäuseteils bleibt auch im zusammengefügten Zustand der beiden Gehäuseteile erhalten.

Der Erfindung liegt die Aufgabe zugrunde, ein Montagegehäuse der eingangs genannten Art so zu gestalten, daß das Einsetzen und Herausnehmen eines Meßwerkes in einem leicht elastisch verformbaren Zustand der Dosenwand erfolgen kann und daß die Dosenwand im fertig montierten Zustand eine wesentlich höhere Formstabilität aufweist und in der Lage ist starke radiale Klemmkräfte aufzunehmen.

Gelöst wird diese Aufgabe erfindungsgemäß dadurch, daß die Gehäusedose und der Ringflansch aus separaten Einzelteilen bestehen, die durch lösbare Formschlußverbindungen zu einer formstbilen Baueinheit zusammengefügt sind, wobei der Ringflansch rückseitig einen doppelwandigen Zen trierring mit einer den offenen Wandrand der an sich elastisch verformbaren Dosenwand der Gehäusedose passend aufnehmenden Ringnut aufweist.

Durch die erfindungsgemäße Gestaltung des Montagegehäuses wird der Dosenwand der Gehäusedose eine große radiale Elastizität bzw. elastische Verformbarkeit verliehen, die es ermöglicht, die zum Festhalten des eingesetzten Zeigermeßwerkes erforderlichen Schnappelemente, z. B. in Form von radial nach innen vorspringenden Sperrzähnen, unmittelbar an der Innenseite der Dosenwand anzuformen und sie dabei relativ weit nach innen vorspringen zu lassen, damit sie dem zu montierenden Meßwerk auch einen sicheren Halt geben können. Andererseits ist durch die formschlüssige Aufnahme des Dosenwandrandes im doppelwandigen Zentrierring die Möglichkeit gegeben, die radiale Elastizität der im wesentlichen zylindrischen Dosenwand mit dem Aufsetzen des Ringflansches vollständig aufzuheben, so daß die Gehäusedose, insbesondere die Dosenwand, insgesamt die Formstabilität einer einstückig mit ihrem Ringflansch verbundenen Gehäusedose erhält und somit auch geeignet ist, klemmend in eine Aufnahmebohrung einer Trägerplatte, z.B. einer geschnitzten Holzplatte od. dgl., eingesetzt zu werden, ohne daß zur Fixierung zusätzliche Befestigungsmittel wie z. B. Schrauben od. dgl. erforderlich wären. Zusätzlich ist der Vorteil gegeben, daß ein und dieselbe Gehäusedose in ihrer Standardausführung wahlweise mit unterschiedlichen z. B. unterschiedlich großen Ringflanschen versehen werden kann, die für unterschiedlich große Meßskalen und Zeiger auswählbar sind. Auch das Auswechseln beispielsweise eines schadhaft gewordenen Zeigermeßwerkes wird durch die erfindungsgemäße Gestaltung wesentlich erleichtert. Es besteht die Möglichkeit, den Ringflansch auf einfache Weise von der Gehäusedose abzunehmen, um der Dosenwand wieder die bei der Montage vorhandene radiale Elastizität zu verleihen, so daß das Lösen der das Meßwerk in der Gehäusedose haltenden Sperrzähne leicht durchgeführt werden kann und ebenso das Einsetzen und Befestigen des Austauschwerkes.

Eine sehr einfache Formschlußverbindung ergibt sich durch die Ausgestaltung der Erfindung nach Anspruch 2. Die hat nicht nur den Vorteil, keinen zusätzlichen Raum nach innen oder nach außen zu beanspruchen, sondern sie ergibt auch auf einfache Weise eine stabile Verbindung zwischen dem Ringflansch und der Gehäusedose und sie kann andererseits zum Zwecke der Demontage aber auch wieder relativ leicht, insbesondere ohne Werkzeug gelöst werden.

Durch die Ausgestaltung nach Anspruch 3 ergibt sich die Möglichkeit, das Verrasten der Schnappelemente mit dem eingesetzten Meßwerk bzw. deren Lösen vom eingesetzten Meßwerk durch entsprechende manuelle Verformung der Dosenwand zu erreichen, so daß auch hierzu keine Werkzeuge benötigt werden.

Mit Hilfe der Ausgestaltung nach Anspruch 4, die an der Außenseite der Dosenwand Klemmkeile mit scharfen Endkanten vorsieht, läßt sich die Gehäusedose auf einfache Weise mit einem ausreichend stabilen Klemmsitz in einer mit einem entsprechenden Innendurchmesser versehenen zylindrischen Ausnehmung einer Trägerplatte befestigen.

Durch die beiden Verwendungsarten nach den Ansprüchen 5 und 6 lassen sich die Vorteile der erfindungsgemäßen Montagedose in der effektivsten Weise ausnützen.

Die Erfindung wird anhand der beiliegenden Zeichnung im folgenden näher erläutert. Es zeigt:
- Fig. 1: eine Montagedose mit eingesetztem Meßwerk in Frontansicht;
- Fig. 2: einen Schnitt II-II aus Fig. 1;
- Fig. 3: eine in eine zylindrische Bohrung einer im Schnitt dargestellten Trägerplatte eingesetzte Montagedose;
- Fig. 4: eine perspektivische Explosionsdarstellung einer Montagedose mit Meßwerk und Trägerplatte;
- Fig. 5: eine perspektivische Unteransicht des Ringflansches aus Fig. 4;
- Fig. 6: eine der Formschlußverbindungen zwischen Gehäusedose und Ringflansch in perspektivischer Ansicht;
- Fig. 7: einen Schnitt VII-VII aus Fig. 6;
- Fig. 8 und Fig. 9: zwei weitere Ringflansche mit unterschiedlichen Außendurchmessern in perspektivischer Draufsicht.

Das in der Zeichnung als Ausführungsbeispiel dargestellte Montagegehäuse dient zur schützenden und haltenden Aufnahme von Zeigerwerken, wie beispielsweise Thermometer, Barometer, Hygrometer od. dgl. Es besteht aus einer im wesentlichen zylindrischen Gehäusedose 1 sowie aus einem Flanschring 2, die beide als separate Einzelteile hergestellt und durch lösbare Formschlußverbindungen (3) zu einer formstabilen Baueinheit zusammengefügt bzw. zusammenfügbar sind. Der Ringflansch 2 ist rückseitig, d.h. auf der der Gehäusedose 1 zugekehrten Seite, mit einem doppelwandigen Zentrierring 4 versehen, der sich entlang des Randes 6 einer kreisrunden Öffnung 7 erstreckt, deren Durchmesser annähernd dem Innendurchmesser der Gehäusedose entspricht. Auf seiner der Gehäusedose 1 zugekehrten Seite weist dieser Zentrierring 4 eine offene Ringnut 8 auf, die sich zwischen einem inneren Ringwandelement 9 und einem äußeren Ringwandelement 10 befindet, wobei letzteres eine etwas größere axiale Länge aufweist als das Ringwandelement 9.
Am äußeren Umfang ist der Flanschring 2 mit einer frontseitig axial vorspringenden Ringwand 11 versehen, die eine planebene Ringfläche 12 umschließt bzw. radial nach außen begrenzt, die zum Auflegen bzw. Befestigen von Skalenscheiben dienen und die in der Zeichnung nicht dargestellt sind.

Die Gehäusedose 1, die wie der Flanschring 2 aus einem einstückigen Kunststoffteil besteht, weist eine im wesentlichen zylindrische Dosenwand 13 mit einer Dicke **d** von etwa 1 mm auf, die auf der dem Ringflansch 2 zugekehrten Frontseite offen ist und mit einem planebenen, glatten ringförmigen Wandrand 14 endet. Auf der gegenüberliegenden Seite ist die Dosenwand 13 mit einem einstückig angeformten, radialen Gehäuseboden 15 versehen, der auf seiner Innenseite Zentrierzapfen 16 und 17 von geringer axialer Höhe aufweist. Außerdem ist er mit Belüftungsöffnungen 18 und mit einer Aufhängeöse 18' versehen. Die Zentrierzapfen 17 weisen jeweils Bohrungen 19 auf, um gegebenenfalls Befestigungsschrauben zum Befestigen eines eingesetzten Zeigermeßwerkes 20 aufnehmen zu können.

Die Dosenwand 13 ist mit mehreren schlitzartigen Durchbrüchen versehen, die eine für Thermometer, Barometer und Hygrometer erforderliche gute Belüftung des Innenraums der Gehäusedose 1 ermöglichen. Auf ihrer Außenseite ist die Dosenwand 13 mit vier jeweils um 90° zueinander versetzt angeformten Klemmkeilen 22 ausgerüstet, die sich zum Gehäuseboden 15 hin verjüngen und jeweils die Form eines axial hälftig geteilten Kegels mit scharfen Endkanten 23 aufweisen.

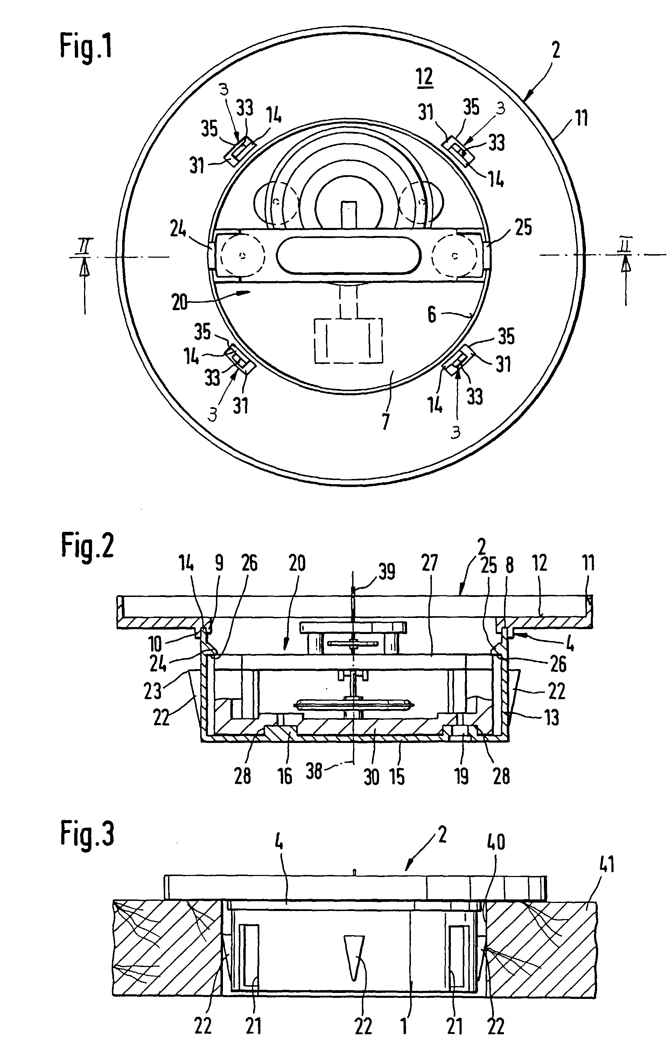

An der Innenseite der Dosenwand sind zwei sich diametral gegenüberliegende Sperrzähne 24 und 25 angeordnet, die jeweils eine parallel zum Gehäuseboden 15 verlaufende Haltefläche 26 aufweisen und die in einem solchen Axialabstand vom Gehäuseboden 15 angeordnet sind, daß sie eine obere Gestellplatine des Zeigermeßwerkes 20 haltend übergreifen können. Es ist aus Fig. 2 ersichtlich, daß das Zeigermeßwerk 20 mit einer unteren Sockelplatte 30 versehen ist, welche auf ihrer Unterseite Vertiefungen 28 aufweist, die zur zentrierenden Aufnahme der Zentrierzapfen 16 bzw. 17 dienen.

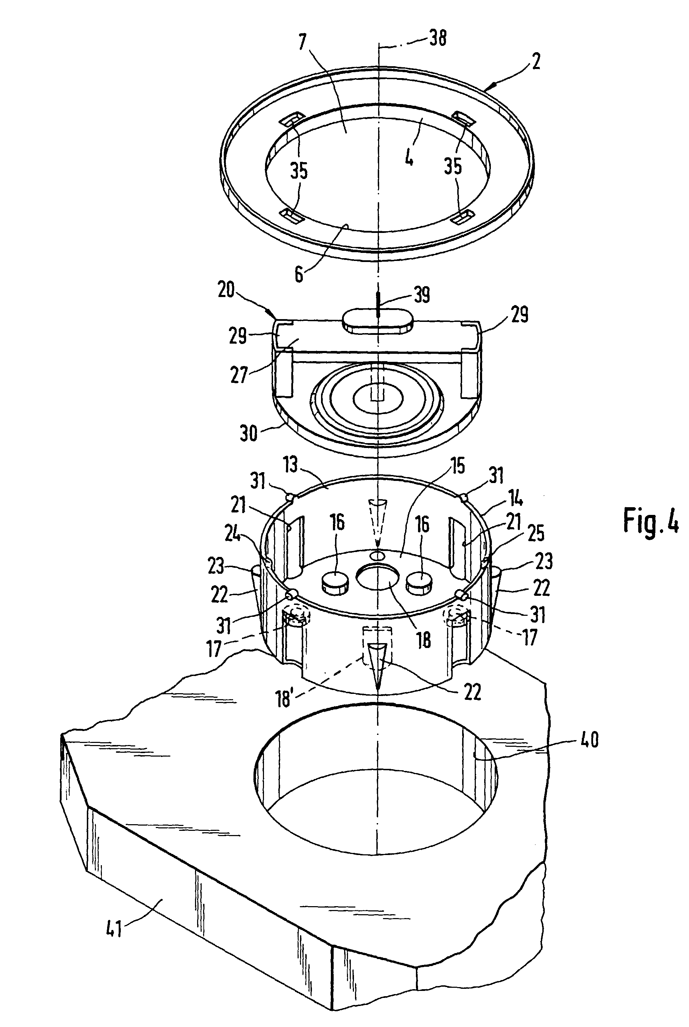

Die Dosenwand 13 ist in diesem in Fig. 4 dargestellten Zustand ohne aufgesetzten Flanschring 2 aufgrund ihrer geringen Wanddicke **d** und der Eigenschaft des gewählten Kunststoffes in radialer Richtung elastisch verformbar, so daß beim Einsetzen des Zeigermeßwerkes 20 die Sperrzähne 24 und 25 relativ leicht in radialer Richtung nach außen gedrückt werden können. Es ist deshalb auch möglich, die Sperrzähne 24 und 25 ausreichend weit nach innen vorspringen zu lassen, damit ihre radialen Halteflächen 26 die Randabschnitte 29 der Gestellplatine 27 in ausreichendem Maße übergreifen können, um eine zuverlässige Fixierung des Zeigermeßwerkes 20 in der Gehäusedose 1 zu gewährleisten.

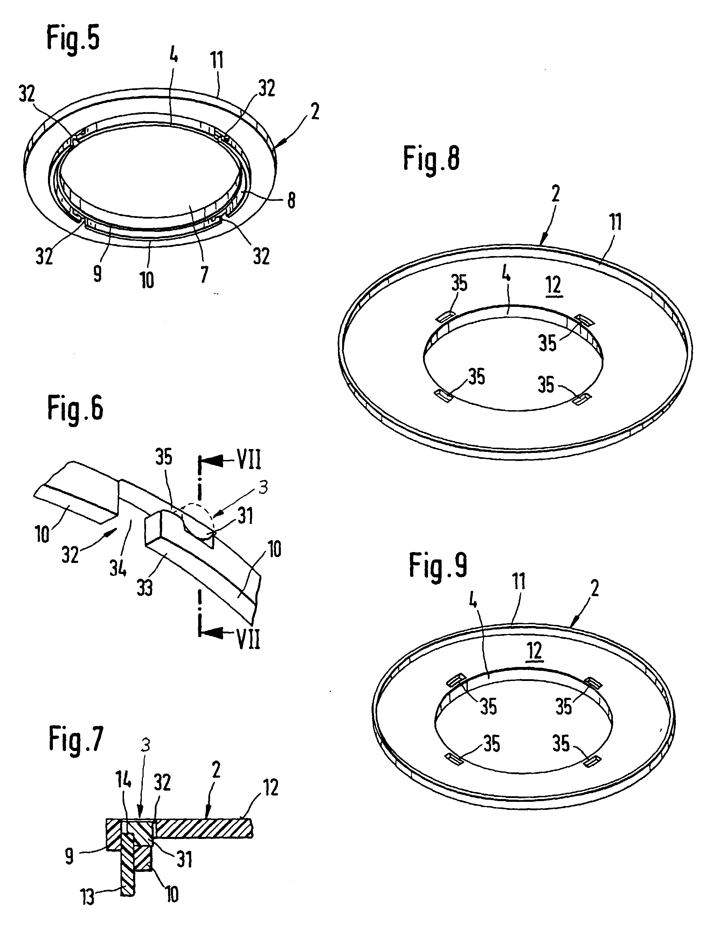

Um eine zuverlässige jedoch jederzeit wieder lösbare Verbindung zwischen der Gehäusedose 1 einerseits und dem Ringflansch 2 andererseits herstellen zu können, sind am Wandrand 14 der Dosenwand 13 vier um 90° zueinander versetzt angeordnete Radialzapfen 31 angeformt, und es ist das äußere Ringwandelement 10 des Zentrierringes 4 mit vier entsprechend angeordneten, L-förmigen Ausnehmungen 32 versehen, die jeweils eine in Umfangsrichtung verlaufende Rastzunge 33 als Bestandteil des Ringwandelementes 10 bilden. Diese Ausnehmungen 32 bestehen jeweils aus einem achsparallel verlaufenden Abschnitt 34 und einem in Umfangsrichtung verlaufenden Abschnitt 35, der sich in der Draufsicht des Flanschringes 2 jeweils als rechteckiger Durchbruch darstellt. Um den Flanschring 2 an der Gehäusedose 1 zu befestigen, werden die Radialzapfen 31 jeweils gemeinsam in die entsprechend verteilt angeordneten vertikalen Abschnitte 34 der L-förmigen Ausnehmungen 32 soweit eingeführt, bis der Wandrand 14 auf dem Grund der Ringnut 8 aufsitzt, dann werden durch entsprechende Drehung der Gehäusedose 1 um deren eigene Achse 38, die dann schon mit der Achse des Flanschringes 2 zusammenfällt, die Radialzapfen 31 rastend über die Rastzungen 33 geschoben, so daß die Radialzapfen 31 die in Fig. 6 dargestellte Position einnehmen, in der sie jeweils mit einer der Rastzungen 33 verrastet sind und in welcher sie den Flanschring 2 mit der Gehäusedose 1 fixierend verbinden.

Es ist leicht vorstellbar, daß in der umgekehrten Bewegungsfolge der Flanschring 2 von der Gehäusedose 1 wieder gelöst werden kann.

Durch das Verbinden des Flanschringes 2 mit der Gehäusedose 1 entsteht nicht nur eine bauliche Einheit sondern es wird auch der für die weitere Verwendung der Montagedose entscheidende Effekt erzielt, daß die radiale Elastizität der Dosenwand 13 aufgehoben wird, in dem bei der Herstellung dieser Verbindung der Wandrand 14 formschlüssig in die Ringnut 8 des Zentrierringes 4 eintaucht, so daß dieser gegen jegliche radiale Bewegung gesichert ist und die Gehäusedose 1 somit insgesamt eine hohe radiale Stabilität erhält. Diese Formstabilität ist dann besonders wichtig, wenn das fertig montierte Meßgerät mit Hilfe der Gehäusedose 1 bzw. des Montagegehäuses z. B. in einer zylindrischen Bohrung 40 einer beispielsweise aus Holz bestehenden Trägerplatte 41 befestigt und durch die Klemmkeile 22 am Außenmantel der Dosenwand 13 mittels Klemmsitz befestigt werden soll. Es ist dazu lediglich erforderlich, den Durchmesser der zylindrischen Bohrung 40 etwa um 1 bis 1,5 mm kleiner zu wählen, als der Durchmesser, auf dem die scharfen Randkanten 23 der Klemmkeile 22 liegen und die Gehäusedose 1 mit dem Gehäuseboden 15 voraus in diese Bohrung 40 hineinzudrücken, so daß sich die scharfen Randkanten 23 in der Innenfläche der Bohrung 40 der z. B. aus Holz bestehenden Tragplatte 41 leicht eingraben und somit dem gesamten Montagegehäuse in dieser Bohrung 40 einen festen Sitz verleihen können.

Durch die Zweiteiligkeit des Montagegehäuses ist der Vorteil gegeben, daß man einerseits zum Einsetzen bzw. Herausnehmen des Zeigermeßwerkes 20 in die bzw. aus der Gehäusedose 1 die Radialelastizität ihrer Dosenwand 13 zur Erleichterung der Montage ausnützen kann, daß man aber auch andererseits die Möglichkeit hat, diese Radialelastizität der Dosenwand 13 aufzuheben, so daß die Gehäusedose 1 mit einem strammen Klemmsitz in einer zylindrischen Bohrung 40 einer Trägerplatte befestigt werden kann.

Falls es nicht möglich ist, diesen zwischen der Gehäusedose 1 und der Wandung der Bohrung 40 hergestellten Klemmsitz zu lösen, besteht die Möglichkeit, in diesem Zustand den Flanschring 2 durch eine entsprechende Drehbewegung relativ zur Gehäusedose 1 von dieser abzunehmen, damit ihre Dosenwand 13 wieder die ursprüngliche radiale Elastizität erhält und sich somit relativ leicht aus der Bohrung 40 herausnehmen läßt.

Ein wichtiger Gesichtspunkt, der mit der Aufhebung der radialen Elastizität der Dosenwand 13 verbunden ist, ist der, daß sich bei aufgesetztem Flanschring 2 auch die Sperrzähne 24, 25 nicht von ihrem Haltesitz an der Gestellplatine 27 des Zeigermeßwerks 20 entfernen lassen, daß dazu vielmehr das Abnehmen des Ringflansches 2 von der Gehäusedose 1 erforderlich ist.

Ein weiterer Vorteil besteht darin, daß Ringflansche 2 mit unterschiedlichen Außendurchmessern und unterschiedlichen Öffnungen 7 jedoch mit gleichen Zentrierringen 4 und Verbindungselementen 31/32 wahlweise mit der Gehäusedose verbunden werden können, so daß auch die Möglichkeit besteht, in die Gehäusedose 1 Meßwerke unterschiedlicher Art, insbesondere mit unterschiedlich großen Zeigern, die auf einer zentralen Zeigerwelle 39 eines Zeigermeßwerkes 20 sitzen und sich um die Gehäuseachse 38 drehen, bestückt werden kann.

## Patentansprüche

1. Montagegehäuse aus Kunststoff für Zeigermeßwerke, insbesondere für mechanische Thermometer, Barometer, Hygrometer und dgl., die jeweils eine zentrale Zeigerwelle (39) mit einem über eine Ringskala beweglichen Zeiger aufweisen, bestehend aus einer im wesentlichen zylindrischen Gehäusedose (1) mit einem rückseitig an einer Dosenwand angeformten Gehäuseboden (15) und einem frontseitigen Ringflansch (2), die im Innern mit federnd auslenkbaren Schnappelementen (24, 25) zum selbsttätigen Halten eines eingesetzten Meßwerks (20) versehen ist und die außenseitig sperrzahnartige Befestigungselemente (22) zu ihrer Befestigung in einer Ausnehmung (40) eines Meßgeräteträgers (41) aufweist,
**dadurch gekennzeichnet,**
daß die Gehäusedose (1) und der Ringflansch (2) aus separaten Einzelteilen bestehen, die durch lösbare Formschlußverbindungen (3) zu einer formstabilen Baueinheit zusammengefügt sind, wobei der Ringflansch (2) rückseitig einen doppelwandigen Zentrierring (4) mit einer den offenen Wandrand (14) der an sich elastisch verformbaren Dosenwand (13) der Gehäusedose (1) passend aufnehmenden Ringnut (8) aufweist.

2. Montagegehäuse nach Anspruch 1, dadurch gekennzeichnet, daß die Formschlußverbindung (3) gebildet ist aus mehreren am offenen Wandrand (14) der Dosenwand (13) verteilt angeordneten Radialzapfen (31) und L-förmigen Ausnehmungen (32) im Zentrierring (4), wobei die Radialzapfen (31) unter Erzeugung einer selbsthaltenden Klemmspannung in die L-förmigen Ausnehmungen (32) durch eine Schiebe- Drehbewegung einführbar sind.

3. Montagegehäuse nach Anspruch 1 oder 2, dadurch gekennzeichnet, daß als Schnappelemente an der Innenseite der Dosenwand (13) wenigstens zwei sich diametral gegenüberliegende Sperrzähne (24, 25) angeformt sind.

4. Montagegehäuse nach einem der Ansprüche 1 bis 3, dadurch gekennzeichnet, daß die Dosenwand (13) der Gehäusedose (1) als Befestigungselmente außenseitig mehrere verteilt angeordnete, radial nach außen vorspringende und sich zum Gehäuseboden (15) hin verjüngende Klemmkeile (22) mit scharfen Endkanten (23) aufweist.

5. Verwendung eines Montagegehäuses aus Kunststoff für Zeigermeßwerke, insbesondere für mechanische Thermometer, Barometer, Hygrometer und dgl., die jeweils eine zentrale Zeigerwelle (39) mit einem über eine Ringskala beweglichen Zeiger aufweisen, bestehend aus einer im wesentlichen zylindrischen Gehäusedose (1) mit einem rückseitig an einer Dosenwand angeformten Gehäuseboden (15) und einem frontseitigen Ringflansch (2), die im Innern mit federnd auslenkbaren Schnappelementen (24, 25) zum selbsttätigen Halten eines eingesetzten Meßwerks (20) versehen ist und die außenseitig sperrzahnartige Befestigungselemente (22) zu ihrer Befestigung in einer Ausnehmung (40) eines Meßgeräteträgers (41) aufweist, wobei
die Gehäusedose (1) und der Ringflansch (2) aus separaten Einzelteilen bestehen, die durch lösbare Formschlußverbindungen (3) zu einer formstabilen Baueinheit zusammengefügt sind, wobei der Ringflansch (2) rückseitig einen doppelwandigen Zentrierring (4) mit einer den offenen Wandrand (14) der an sich elastisch verformbaren Dosenwand (13) der Gehäusedose (1) passend aufnehmenden Ringnut (8) aufweist, dadurch gekennzeichet daß das Meßwerk (20) bei abgenommenem Flanschring (2) in die Gehäusedose (1) eingesetzt und dabei mit den Sperrzähnen (24, 25) der Dosenwand (13) in Eingriff gebracht wird und daß danach die Gehäusedose (1) durch das Ineingriffbringen der Radialzapfen (31) mit den L-förmigen Ausnehmungen (32) des Zentrierringes (4) am Ringflansch (2) befestigt wird.

6. Verwendung eines nach Anspruch 5 montierten Montagegehäuses, dadurch gekennzeichnet, daß die Gehäusedose (1) koaxial in eine zylindrische Ausnehmung (40) eines Meßgeräteträgers, z.B. einer Dekorplatte (41) aus Holz- Kunststoff oder Metall, eingepreßt wird, deren Durchmesser um höchstens 1 bis 1,5 mm kleiner ist als der Durchmesser, auf dem die äußeren Kanten (23) der Klemmkeile (22) liegen.

## Claims

1. Plastic housing for pointer instruments, in particular for mechanical thermometers, barometers, hygrometers and the like, which each have a central pointer shaft (39) with a pointer movable over an annular scale, comprising an essentially cylindrical housing case (1) with a housing base (15) formed on the rear of a case wall and a front annular flange (2), which housing case is provided on the inside with elastically movable snap elements (24, 25) for automatically holding an inserted measuring instrument (20), and which has outer locking tooth-like securing elements (22) for securing in a recess (40) of a measuring device carrier (41), characterised in that the housing case (1) and the annular flange (2) are separate individual parts which are joined together by detachable positive connections (3) to a stable unit whereby the annular flange (2) on the rear has a double-walled centring ring (4) with an annular groove (8) receiving the open wall edge (14) of the elastically deformable case wall (13) of the housing case (1).

2. Housing according to claim 1, characterised in that the positive connection (3) is formed from several radial pins (31) arranged around the open wall edge (14) of the case wall (13) and L-shaped recesses (32) in the centring ring (4), whereby the radial pins (31) can be inserted producing an self-holding clamping connection into the L-shaped recesses (32) by a push-rotary movement.

3. Housing according to claim 1 or 2, characterised in that as snap elements at least two diametrically opposite locking teeth (24, 25) are formed on the inside of the case wall (13).

4. Housing according to one of claims 1 to 3, characterised in that the case wall (13) of the housing case (1) as securing elements comprises externally several distributed radially outwards projecting clamping parts (22) tapering towards the housing base (15) with sharp end edges (23).

5. Use of a plastic housing for pointer instruments in particular for mechanical thermometers, barometer, hygrometers and the like, which each have a central pointer shaft (39) with a pointer movable over an annular scale, comprising an essentially cylindrical housing case (1) with a housing base (15) formed on the rear of a case wall and a front annular flange (2), which housing case is provided on the inside with elastically movable snap elements (24, 25) for automatically holding an inserted measuring instrument (20), and which has outer locking tooth-like securing elements (22) for securing in a recess (40) of a measuring device carrier (41), in which the housing case (1) and the annular flange (2) are separate individual parts which are joined together by detachable positive connections (3) to a stable unit whereby the annular flange(2) on the rear has a double-walled centring ring (4) with an annular groove (8) receiving the open wall edge (14) of the elastically deformable case wall (13) of the housing case (1) characterised in that the measuring instrument (20) with a removed flange ring (2) is inserted into the housing case (1) and thus engaged with the locking teeth (24, 25) of the case wall (13) and in that afterwards the housing case (1) is secured by the engagement of the radial pins (31) with the L-shaped recesses (32) of the centring ring (4) on the annular flange (2).

6. Use of a housing mounted according to claim 5, characterised in that the housing case (1) is pressed coaxially into a cylindrical recess (40) of a measuring device carrier, e.g. a decorative plate (41) made of wood, plastic or metal the diameter of which is at most 1 to 1.5 mm smaller than the diameter on which the outer edges (23) of the clamping wedges (22) lie.

## Revendications

1. Boîtier de montage en plastique pour éléments de mesure à aiguille, en particulier pour thermomètres, baromètres, hygromètres et appareils semblables mécaniques, qui présentent chacun un arbre à aiguille central (39) portant une aiguille mobile devant une échelle annulaire, constitué d'une boîte sensiblement cylindrique (1) ayant un fond de boîtier (15) formé du côté arrière sur une paroi de boîte, et d'une bride annulaire côté avant (2), la boîte étant pourvue à l'intérieur d'éléments à enclenchement déviables élastiquement (24, 25) pour la retenue automatique d'un élément de mesure (20) placé à l'intérieur, et présentant sur sa face extérieure des éléments de fixation du genre dents de blocage (22) pour sa fixation dans un évidement (40) d'un support d'appareil de mesure (41), caractérisé par le fait que la boîte (1) et la bride annulaire (2) sont des éléments séparés qui sont assemblés par des joints à engagement démontables (3) en un ensemble de forme stable, la bride annulaire (2) présentant sur sa face arrière un anneau de centrage à double paroi (4) ayant une rainure annulaire (8) qui reçoit de manière ajustée le bord libre (14) de la paroi déformable élastiquement (13) de la boîte (1).

2. Boîtier de montage selon la revendication 1, caractérisé par le fait que le joint à engagement (3) est formé de plusieurs ergots radiaux (31) répartis sur le bord libre (14) de la paroi (13) de la boîte et d'évidements en forme de L (32) faits dans l'anneau de centrage (4), les ergots radiaux (31) pouvant être introduits dans les évidements en forme de L (32) par un mouvement de translation-rotation avec production d'un serrage de maintien.

3. Boîtier de montage selon l'une des revendications 1 et 2, caractérisé par le fait que comme éléments à enclenchement sont faites, sur la face intérieure de la paroi (13) de la boîte, au moins deux dents de blocage diamétralement opposées (24, 25).

4. Boîtier de montage selon l'une des revendications 1 à 3, caractérisé par le fait que la paroi (13) de la boîte (1) présente sur sa face extérieure, comme éléments de fixation, plusieurs coins de serrage répartis (15) saillant radialement vers l'extérieur, se rétrécissant vers le fond de boîtier (15) et pourvus d'arêtes d'extrémité vives (23).

5. Utilisation d'un boîtier de montage en plastique pour éléments de mesure à aiguille, en particulier pour thermomètres, baromètres, hygromètres et appareils semblables mécaniques, qui présentent chacun un arbre à aiguille central (39) portant une aiguille mobile devant une échelle annulaire, constitué d'une boîte sensiblement cylindrique (1) ayant un fond de boîtier (15) formé du côté arrière sur une paroi de boîte, et d'une bride annulaire côté avant (2), la boîte étant pourvue à l'intérieur d'éléments à enclenchement déviables élastiquement (24, 25) pour la retenue automatique d'un élément de mesure (20) placé à l'intérieur, et présentant sur sa face extérieure des éléments de fixation du genre dents de blocage (22) pour sa fixation dans un évidement (40) d'un support d'appareil de mesure (41), la boîte (1) et la bride annulaire (2) étant des éléments séparés qui sont assemblés par des joints à engagement démontables (3) en un ensemble de forme stable, la bride annulaire (2) présentant sur sa face arrière un anneau de centrage à double paroi (4) ayant une rainure annulaire (8) qui reçoit de manière ajustée le bord libre (14) de la paroi déformable élastiquement (13) de la boîte (1), caractérisée par le fait que, l'anneau bride (2) étant enlevé, on place l'élément de mesure (20) dans la boîte (1) en le mettant en prise avec les dents de blocage (24, 25) de la paroi (13) de la boîte, et qu'ensuite, on fixe la boîte (1) à la bride annulaire (2) en engageant les ergots radiaux (31) dans les évidements en forme de L (32) de l'anneau de centrage (4).

6. Utilisation d'un boîtier de montage monté selon la revendication 5, caractérisée par le fait qu'on enfonce la boîte (1) coaxialement dans un évidement cylindrique (40) d'un support d'appareil de mesure, par exemple d'une plaque décorative (41) en bois, plastique ou métal, dont le diamètre est inférieur d'au plus 1,0 à 1,5 mm au diamètre sur lequel se trouvent les arêtes extérieures (23) des coins de serrage (22).
